# EUROPEAN PATENT SPECIFICATION

(11) **EP 3 857 164 B1**
(45) Date of publication and mention of the grant of the patent: **06.11.2024**
(21) Application number: 19864400.7
(22) Date of filing: 28.09.2019
(51) Int. Cl.: G01B 7/14, B66B 1/34, B66B 1/36, B66B 3/02, G01D 5/12, B66B 1/40, B66B 1/50, G01D 5/14, G01D 11/24

(54) **LINEAR POSITIONING SENSOR**
LINEARER POSITIONSSENSOR
CAPTEUR DE POSITIONNEMENT LINÉAIRE

(30) Priority: 28.09.2018 US 201862738092 P; 27.09.2019 US 201916585028
(43) Date of publication of application: 04.08.2021
(73) Proprietor: Littelfuse, Inc., Chicago, IL 60631 (US)
(72) Inventor: LEE, Seong-Jae, Chicago, Illinois 60631 (US); KNAPP, Stephen E., Chicago, Illinois 60631 (US)
(74) Representative: Arnold & Siedsma
(86) International application number: PCT/US2019/053703
(87) International publication number: WO 2020/069476

(56) References cited:
- EP-A2- 1 595 114
- EP-B1- 1 595 114
- WO-A2-97/16736
- DE-A1- 102011 006 488
- US-A- 5 831 227
- US-A- 5 831 227
- US-B1- 6 586 929
- US-B1- 6 586 929
- US-B1- 7 088 095
- US-B2- 9 193 563
- US-B2- 9 523 744
- US-B2- 9 523 744

## Description

### Cross-References to Related Applications

This application claims the benefit of U.S. Non-Provisional Patent Application No. 16/585,028, filed September 27, 2019, which claims the benefit of U.S. Provisional Patent Application No. 62/738,092, filed September 28, 2018.

### Field of the Disclosure

Embodiments of the present disclosure relate to the field of sensors, and, more particularly, to linear positioning systems for measuring the linear offset of a first object with respect to a second object.

### Background of the Disclosure

An elevator control system (ECS) is used to stop an elevator car at a desired position at each floor of a building. An ECS typically includes a vertical position sensor that must precisely determine the height of an elevator car with respect to the edge of a floor, regardless of any lateral movements of the elevator car within an elevator shaft. It is desirable, for this purpose that the vertical height of the elevator car be precisely determined with +/- 1 mm positioning error. Typical prior art systems use lasers and mirrors to achieve this accuracy, however, these systems are costly and are prone to variations due to temperature and humidity.

It is with respect to these and other considerations that the present improvements may be useful.

The abstract of US 6586929B1 states: 'A magnetic position sensor including a pair of magnets of opposite polarity which are spaced apart to define an air gap extending along an axis, and a pair of shaped pole pieces at least partially disposed within the air gap and positioned adjacent respective ones of the magnets. The pole pieces are formed of a composite material comprising a non-magnetic material and a magnetizable material. The pole pieces cooperate with the magnets to generate a magnetic field that is substantially symmetrical relative to the axis and which has a magnetic flux density that linearly varies along the axis. A magnetic flux sensor is positioned within the magnetic field to sense varying magnitudes of magnetic flux density along the axis through a sensing plane oriented substantially perpendicular to the axis. The magnetic flux sensor generates an output signal uniquely representative of a sensed magnitude of the magnetic flux density.'

The abstract of US 5831227A states: An apparatus for determining if an elevator car is level with respect to a landing comprises: a first magnet disposed proximate to the landing; a second magnet disposed proximate to the landing; a sensor for providing a level signal in response to detecting a minimum flux region formed by the first and second magnets; and a processor for determining if the elevator is level with respect to the landing in response to the level signal. Each magnet has a first and second magnetic pole. The first and second magnets are adjacently aligned such that the first magnetic pole of the first magnet is adjacent to the first magnetic pole of the second magnet, and the second magnetic pole of the first magnet is adjacent to the second magnetic pole of the second magnet."

The abstract of US9523744B2 states: 'A sensing apparatus and sensing device using the sensing apparatus are capable of identifying a relative position of a body which includes a magnetic module by using sensing data of a sensor unit which may be arranged in a 3-dimensional structure.

### Summary of the Invention

The disclosure relates to a linear positioning system according to claim 1. This summary is provided to introduce a selection of concepts in a simplified form that are further described below in the detailed description. This summary is not intended to identify key features or essential features of the claimed subject matter, nor is it intended as an aid in determining the scope of the claimed subject matter, whereas the invention is set out in the appended set of claims.

In accordance with the present disclosure, a linear positioning system is specified. In the invention, the system includes a pair of magnets disposed adjacent one another and defining a gap therebetween, and a magnetic sensor movable along an axis passing through the gap.

The linear positioning system of the present disclosure includes a pair of magnets disposed adjacent one another and defining a gap therebetween, the magnets having common poles facing one another, and first, second, and third magnetic sensors disposed within a housing and oriented orthogonally with respect to one another for detecting linear motion along X, Z, and Y axes of a Cartesian coordinate system, respectively, the housing being movable along an axis passing through the gap.

### Brief Description of the Drawings

FIG. 1 is a schematic view of a stationary portion of a linear positioning system of the present disclosure;
FIG. 2 is a view of the stationary portion of the system of FIG. 1 showing the orientation of the poles of the magnets;
FIG. 3 is a schematic view of a mobile portion of the system of the present disclosure;
FIG. 4 is a top view of both portions of the system showing their orientations with respect to each other during engagement;
FIG. 5 is a side view of both portions of the system showing their orientations with respect to each other during engagement;
FIG. 6 shows the orientation within a housing of three linear position sensors;
FIG. 7 is a graph showing linear displacement versus detected magnetic field;
FIG. 8 is a graph showing linear displacement versus detected magnetic field for gaps of varying width between the magnets;
FIG. 9 shows distance versus magnetic field for different heights of the magnets;
FIG. 10 shows distance versus magnetic field for different widths of the magnets;
FIG. 11 shows distance versus magnetic field for different thicknesses of the magnets;
FIG. 12 shows linear displacement versus magnetic field for magnetic sensors oriented to detect motion along X and Y axes;
FIG. 13 is a magnetic contour plot showing the linear slope of the magnetic field as the mobile portion of the system moves along the X axis;
FIG. 14 is a magnetic contour plot showing the linear slope of the magnetic field as the mobile portion of the system moves along the Y axis;
FIG. 15 is a magnetic contour plot showing the linear slope of the magnetic field as the mobile portion of the system moves along the Z axis.

### Detailed Description

The present invention will now be described more fully hereinafter with reference to the accompanying drawings, in which preferred embodiments of the invention are shown. This invention, however, may be embodied in many different forms and should not be construed as being limited to the embodiments set forth herein but to the appended claims. Rather, these embodiments are provided so that this disclosure will be thorough and complete, and will fully convey the scope of the invention to those skilled in the art. In the drawings, like numbers refer to like elements throughout.

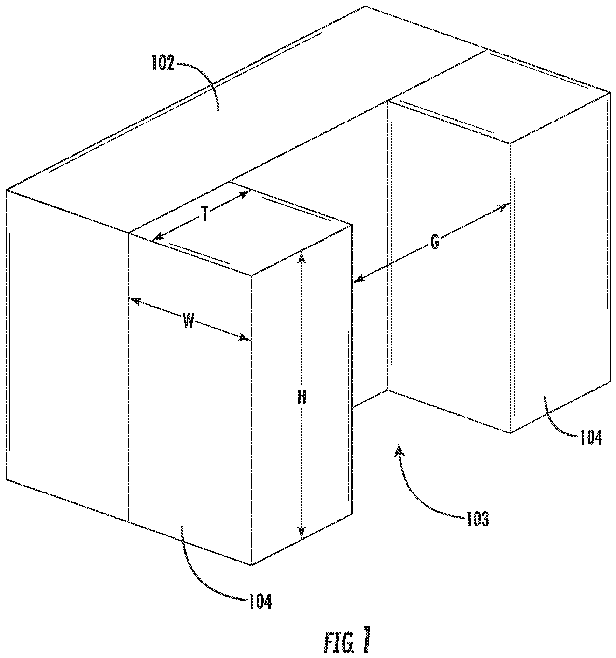

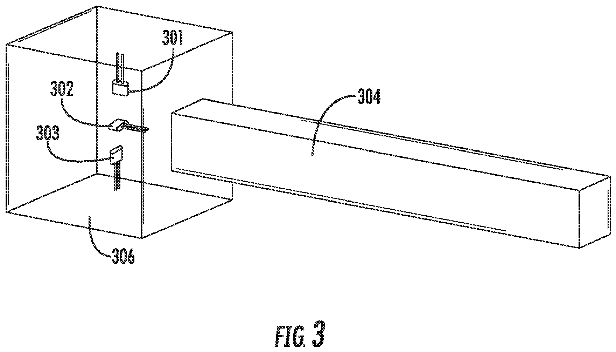

The present embodiments are generally directed to a linear positioning system (hereinafter "the system") having a stationary portion, shown in FIG. 1 and a mobile portion, shown in FIG. 3. FIG. 1 shows the stationary portion of the system including a non-magnetic portion 102 on which magnets 104 are mounted. Non-magnetic portion 102 may be a portion of a stationary object or structure, for example, a wall of an elevator shaft or a stationary portion of an elevator assembly. Alternatively, non-magnetic portion 102 could be any non-magnetic material on which magnets 104 are mounted and which may, in turn, be mounted to the stationary object.

Magnets 104 are mounted on the non-magnetic portion 102 such as to define a gap 103 therebetween. In one preferred embodiment, each of the magnets 104 may be approximately 25 mm in width, 50 mm in height, and 50 mm in thickness, while the gap 103 may vary between approximately 20 mm and 80 mm. The present disclosure is not limited in this regard. In various embodiments, different sizes of magnets could be used, and different gap sizes are possible. As will be discussed in greater detail below, the response of the system of the present disclosure may vary with the geometry of the magnets 104 and the size of the gap 103. In preferred embodiments of the present disclosure, the magnets 104 may be formed of neodymium, although other magnetic materials familiar to those of ordinary skill in the art may be used.

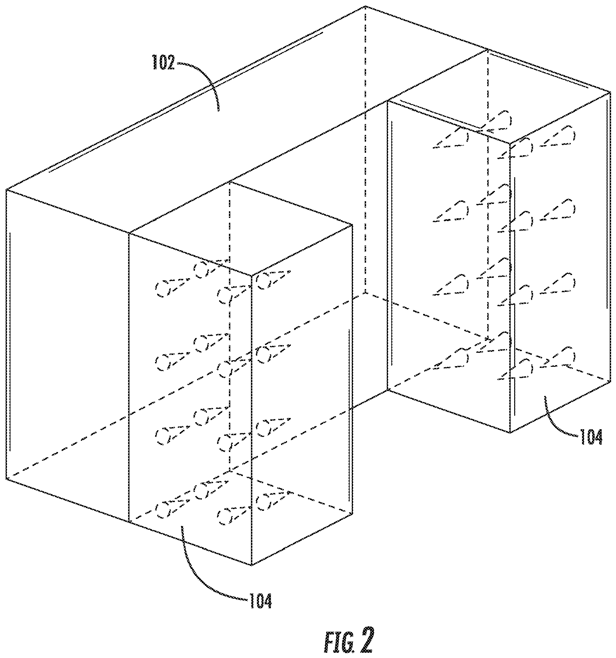

FIG. 2 illustrates the orientation of the poles of the magnets 104 (with tips of the illustrated cones indicating the north poles of the magnets 104), wherein common poles of the magnets face one another. In this case, the north poles of the magnets 104 face each other, however, in alternate embodiments, the orientations of the magnets 104 could be reversed such that their south poles face each other.

FIG. 3 shows the mobile portion of the system of the present disclosure. The mobile portion may include an arm 304 that attaches at a first end to a mobile object or structure such as, for example, an elevator car (not shown). Preferably, arm 304 is composed of a non-magnetic material so as not to interfere with the operation of the sensor. A second end of the arm 304 may be attached to a housing 306 containing three magnetic sensors 301, 302, and 303 oriented orthogonally with respect to each other such as to be able to detect linear motion along X, Z, and Y axes, respectively, of a Cartesian coordinate system.

In one embodiment of the system of the present disclosure, only one magnetic sensor (e.g., magnetic sensor 302 shown in FIG. 3) may be used. For example, in the case where one wishes to detect only the vertical position of an elevator, only one sensor would be required, oriented in the vertical direction. Explanations of the invention below may refer to a single magnetic sensor 302 in the housing however (with the sensors 301, 303 shown in FIG. 3 being omitted from such explanations unless otherwise indicated), it should be appreciated by those of ordinary skill in the art that any number of magnetic sensors could be implemented in the system of the present disclosure. Magnetic sensor 302 may be, in a preferred embodiment, a Hall effect sensor. In other embodiments any different type of magnetic sensor could be used, for example, TMR or GMR sensors.

Housing 306 houses the magnetic sensor 302. Preferably, housing 306 is composed of a non-magnetic, or, more preferably, a non-metallic material to prevent blocking of the magnetic field of magnets 104 from reaching magnetic sensor 302. The material from which housing 306 is made may depend upon the environment in which the sensor is deployed and is preferably configured to protect magnetic sensor 302 from large variations in temperature and/or humidity and from vibrations which may affect the position readings. For example, housing 306 could be composed of high-density polyethylene (HDPE). The present disclosure is not limited in this regard.

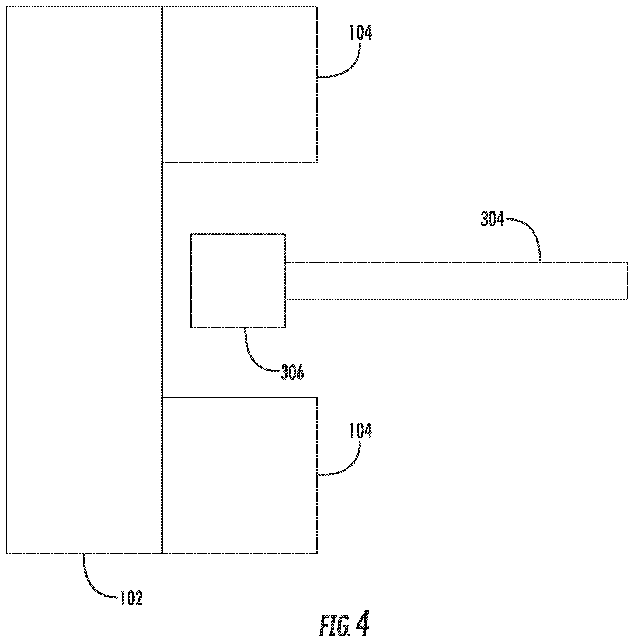

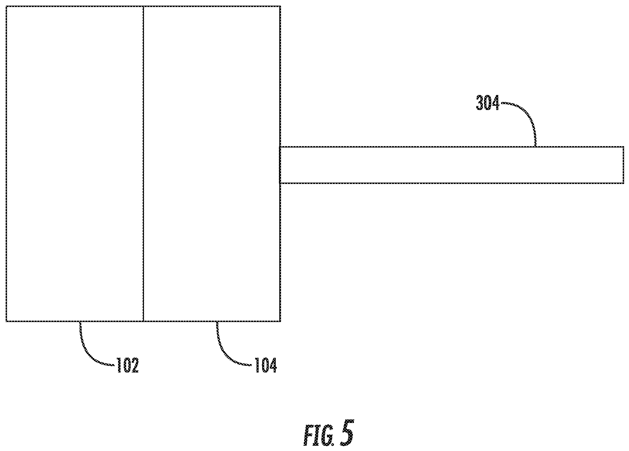

FIG. 4 shows a top view of the stationary and mobile portions of the system oriented with respect to each other during operation. Housing 306 containing magnetic sensor 302 may be attached to a moving object which, when in motion, will move along the Z-axis (i.e. into and out of the page in FIG. 4) between the magnets 104. In one application of the preferred embodiment, non-magnetic portion 102 may be any nonmagnetic material attached to a stationary object, for example, the wall of an elevator shaft. Magnets 104 are mounted on non-magnetic portion 102. Arm 304 may be attached to the moving object, for example, an elevator car (not shown), and housing 306 containing magnetic sensor 302 is attached to the arm and adjusted such that it passes, preferably equidistant between magnets 104, as the mobile object moves along the Z-axis. In the case of the elevator example, the Z-axis would be the vertical axis. FIG. 5 shows a side view the sensor of FIG. 4. Preferably, the mobile and stationary objects will be aligned in the desired orientation with respect to each other when magnetic sensor 302 (now within view) is equidistant from the top and bottom edges of the magnets 104. For example, the alignment may comprise a floor of an elevator car being aligned with a floor of a building.

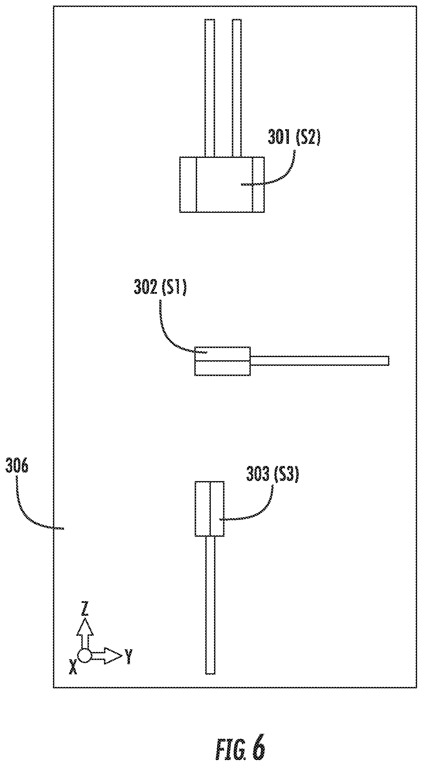

FIG. 6 shows an embodiment of the system of the present disclosure wherein three magnetic sensors 301, 302 and 303 are implemented within the housing 306. FIG. 6 shows the axes of the Cartesian coordinate system in the lower left corner, wherein the Z-axis is vertical, the Y-axis horizontal, and the X-axis is into and out of the page. As such, the orientation of the magnetic sensors 301, 302, 303 is such that magnetic sensor 301 will detect the motion of magnets (e.g., the magnets 104) relative thereto along the X-axis, magnetic sensor 302 will detect motion along the Z-axis, and magnetic sensor 303 will detect motion along the Y-axis.

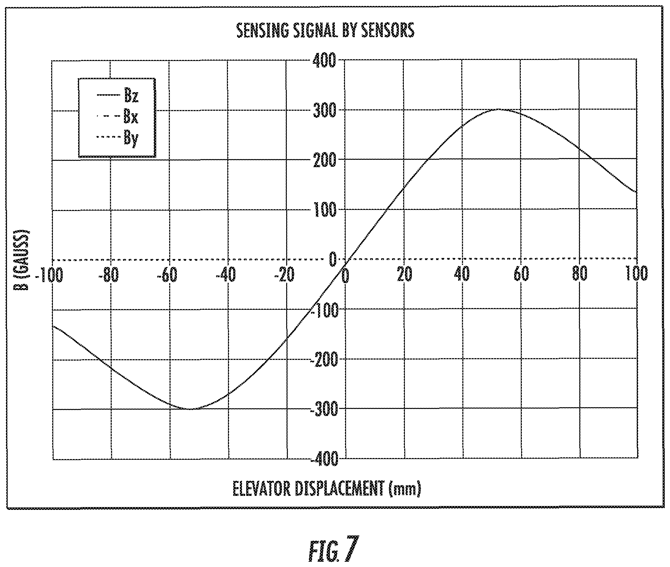

FIG. 7 is a graph showing the vertical displacement of an elevator as the magnetic sensor 302 approaches magnets 104, and then departs magnets 104 as the elevator ascends or descends. For purposes of an example, assume an elevator car having the magnetic sensor 302 mounted thereon is approaching the floor where the magnets 104 are mounted from below. As can be seen in the graph, a negative magnetic field is detected when magnetic sensor 302 approaches magnets 104 from below; a null magnetic field is detected when the magnetic sensor 302 reaches the vertical center point of the magnets 104; and a positive magnetic field is detected as the magnetic sensor 302 continues ascending past the floor. The opposite circumstance occurs when the elevator car is descending. However, in both cases, when the magnetic sensor 302 reaches the vertical center point of the magnets 104, and a null magnetic field is detected, it is assumed that the stationary and mobile objects are aligned. In this case, the positioning of the stationary and mobile components of the system need to be such that when the null magnetic field is detected, the floor of the elevator car is aligned with the floor of the building, preferably with ± 1 mm accuracy.

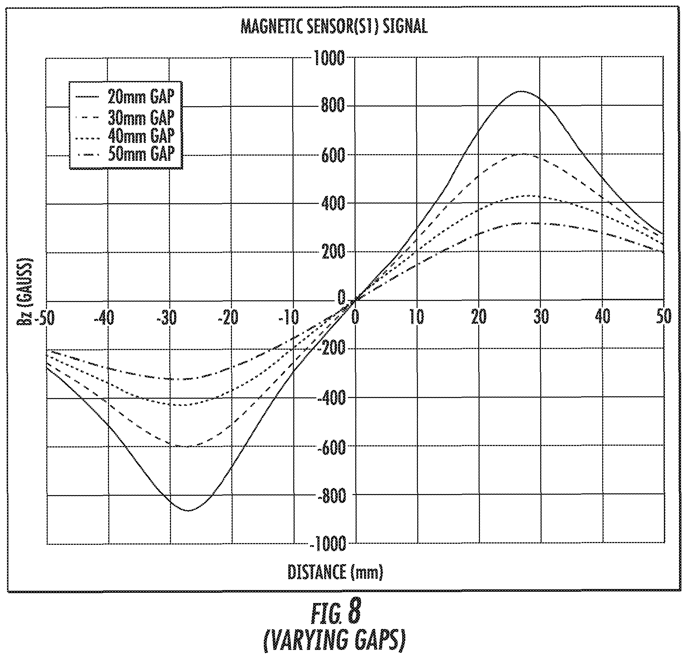

FIG. 8 is a graph showing a vertical travel distance of magnetic sensor 302 passing through the center of the gap 103 between magnets 104 for gaps 103 (see FIG. 1) of various sizes between the magnets 104, wherein the magnets 104 are 25 mm in width, 50 mm in height, and 50 mm in thickness. As the size of gap 103 becomes smaller, the slope of magnetic fields increases. Certain magnetic sensors require minimum peak to peak magnetic field strength for operation. Depending on such minimum magnetic field strength, the size of the gap 103 can be varied to meet such requirement.

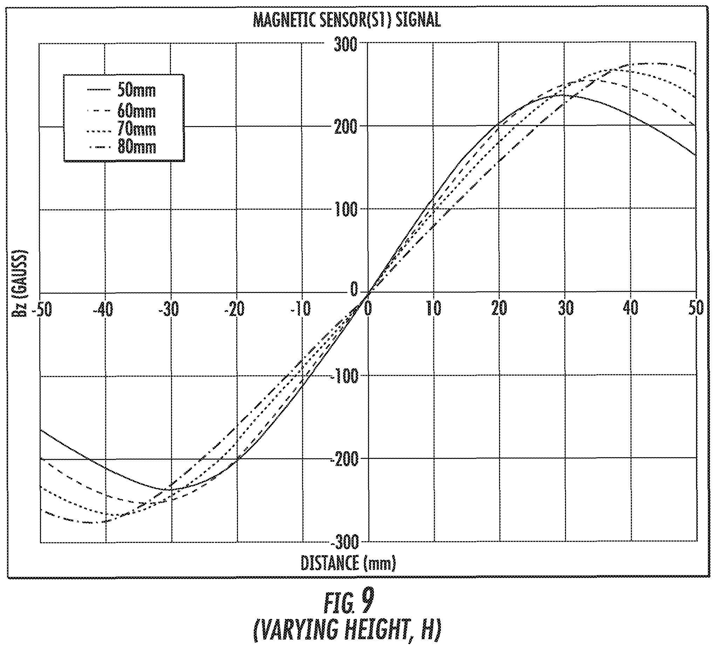

FIG. 9 is a graph showing a vertical travel distance of magnetic sensor 302 passing through the center of the gap 103 between magnets 104 versus the magnetic field measured by the magnetic sensor 302, with magnets 104 of varying heights (50 mm-80 mm), wherein the magnets 104 are 50 mm in width and 25 mm in thickness and wherein the gap 103 measures 60 mm. As can be seen, as the height of the magnets 104 increases, the slope of the measured magnetic field becomes more linear over a longer vertical travel distance range.

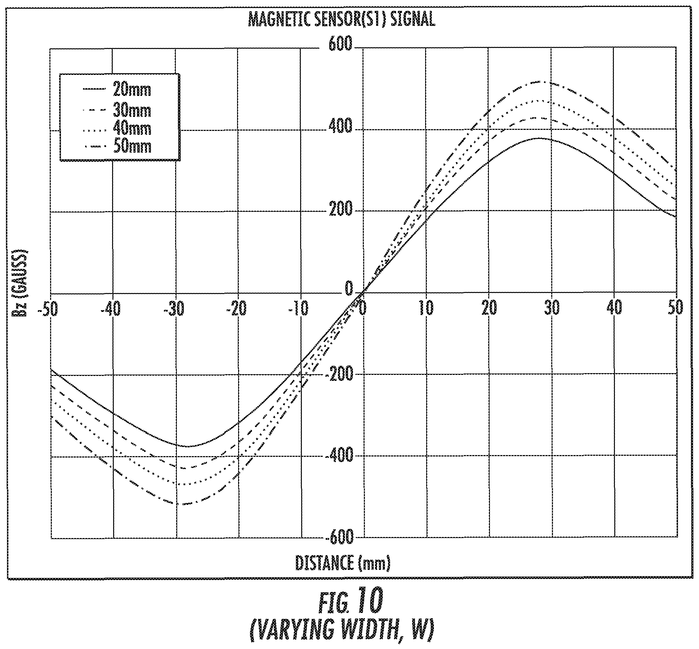

FIG. 10 is a graph showing a vertical travel distance of magnetic sensor 302 passing through the center of the gap 103 between magnets 104 versus the magnetic field measured by the magnetic sensor 302, with magnets 104 of varying widths (20 mm-50 mm), wherein the magnets 104 are 50 mm in height and 25 mm in thickness and wherein the gap 103 measures 40 mm. As can be seen, as the width of the magnets 104 increases, the slope of the measured magnetic field increases.

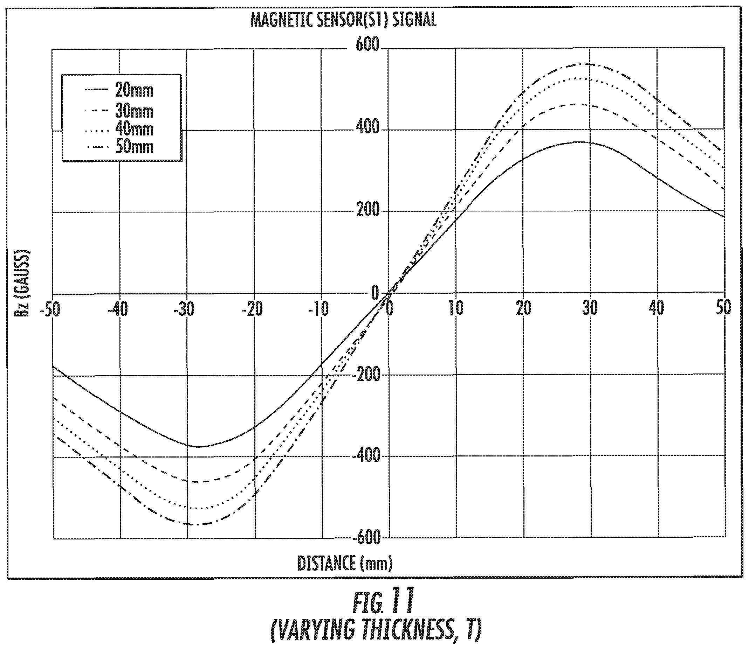

FIG. 11 is a graph showing a vertical travel distance of magnetic sensor 302 passing through the center of the gap 103 between magnets 104 versus the magnetic field measured by the magnetic sensor 302, with magnets 104 of varying thicknesses (20 mm-50 mm), wherein the magnets 104 are 50 mm in height and 50 mm in width and wherein the gap 103 measures 40 mm. As can be seen, thicker magnets 104 provide higher sensitivity slopes and larger peak-to-peak signals relative to thinner magnets 104.

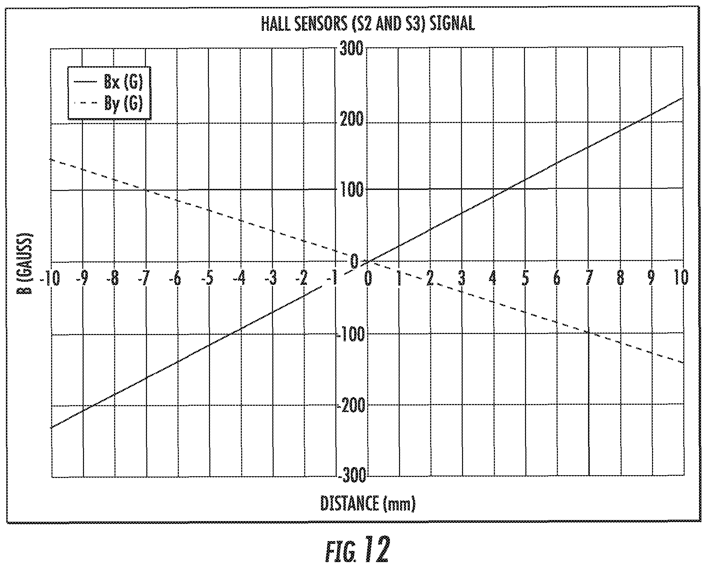

FIG. 12 is a graph showing horizontal travel distances of magnetic sensor 301 moving along the X-axis and magnetic sensor 303 moving along the Y-axis (see FIG. 6) versus magnetic fields measured by the magnetic sensor 301 and the magnetic sensor 303, respectively.

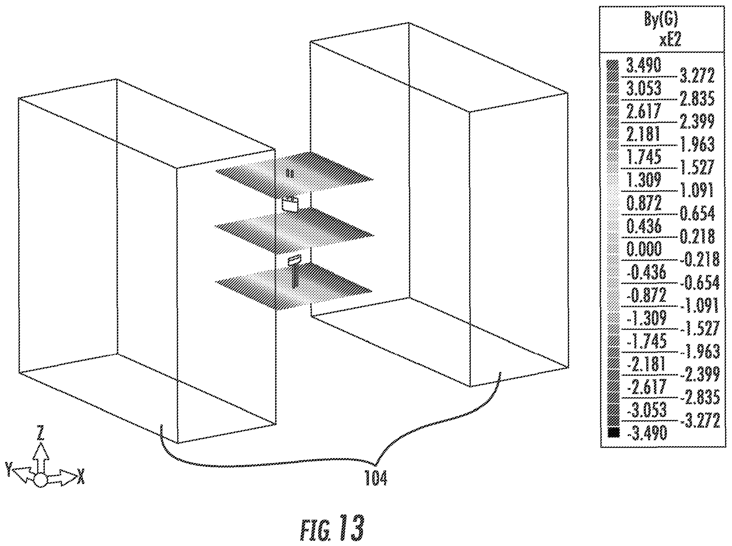

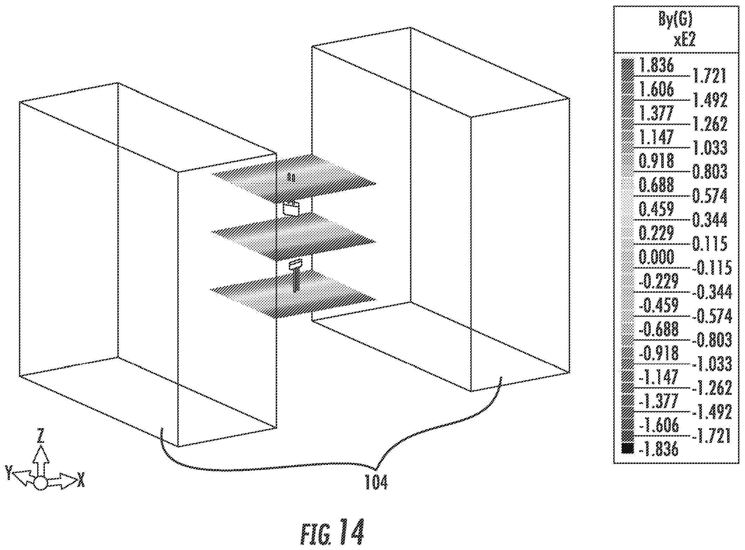

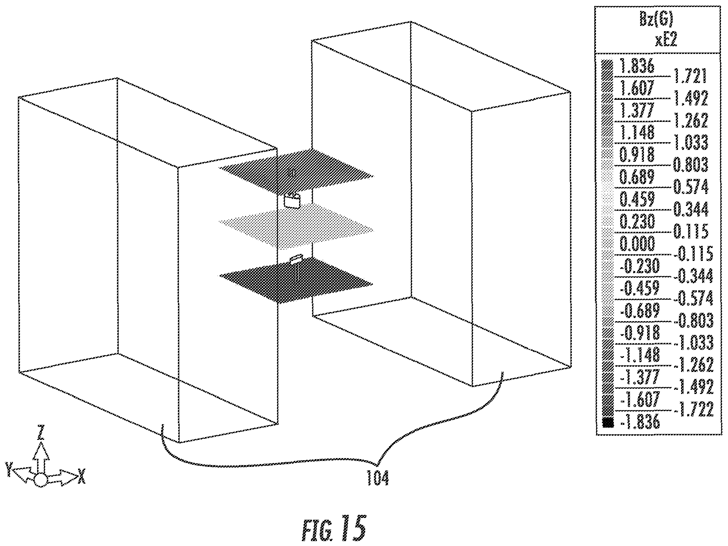

The described linear positioning system has the advantage of using a low-cost, dual magnet arrangement, which provides an asymmetric magnetic field across the X, Y, plain. This allows self-canceling of the magnetic variation in the Z direction throughout the operational temperature range of the system. This also allows for a precise measurement along the Z-axis, to sub-1 mm accuracy, when approaching from either the +Z or -Z directions, and further allows precise measurements, to sub-1 mm accuracy, throughout the X-Y plane bounded by the magnets 104. Magnetic field contour plots are shown on FIGS. 13, 14, and 15 for magnetic fields measured in the x, y, and z planes (Bx, By and Bz), respectively. The contour plots show linear slopes of Bx, By and Bz when sensors move along the X, Y, and Z directions, respectively.

While the present invention has been disclosed with reference to certain embodiments, numerous modifications, alterations and changes to the described embodiments are possible without departing from the sphere and scope of the present invention, as defined in the appended claim(s). Accordingly, it is intended that the present invention not be limited to the described embodiments, but that it has the full scope defined by the language of the following claims, and equivalents thereof. For example, the invention has been described using the example of an elevator car traveling in a vertical direction along a defined Z-axis. The reference to the Z-axis in this case is meant to denote the axis passing between the magnets, and, although described as being vertical in examples herein, one of ordinary skill in the art would realize that this axis could be oriented in any physical direction. It should be further realized that the application of the linear position sensor is not limited to elevators but may be used with any two objects requiring linear positioning and alignment with respect to each other.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

## Claims

1. A linear positioning system comprising:
a pair of magnets (104) disposed adjacent one another along an X-axis of the system and defining a gap (103) therebetween, each of the magnets having a north pole and a south pole and wherein common poles of the magnets (104) face one another,
the pair of magnets (104) being mountable to a stationary structure; and
a magnetic sensor (301, 302, 303), connectable to a mobile structure, and movable along an axis passing through the gap (103), wherein, when in use, a null magnetic field is detected by the magnetic sensor (301, 302, 303) in response to the magnet sensor reaching the vertical point of the magnets (104) wherein the vertical direction is along a Z- axis defined with respect to the system,
wherein the magnetic sensor comprises a first magnetic sensor (301), a second magnetic sensor (302), and a third magnetic sensor (303), wherein the first, second, and third magnetic sensors (301, 302, 303) are oriented orthogonally with respect to one another for detecting linear motion along X, Z, and Y axes of a Cartesian coordinate system, respectively.

2. The system of claim 1, wherein the magnets (104) are oriented with the north poles of the magnets facing one another.

3. The system of claim 1, wherein the magnets (104) are oriented with the south poles of the magnets facing one another.

4. The system of any of the preceding claims, comprising the stationary structure, wherein the stationary structure is a wall of an elevator shaft.

5. The system of any of the preceding claims, comprising the mobile structure, wherein the mobile structure is an elevator car.

6. The system of any of the preceding claims, wherein the magnetic sensor (301, 302, 303) is disposed within a housing (306) mountable on an arm connected to the mobile structure.

7. The system according to claim 6, wherein the housing (306) is movable along an axis passing through the gap (103).

8. An elevator car comprising a system according to any of the preceding claims.

9. An elevator comprising an elevator car according to claim 8.

## Patentansprüche

1. Lineares Positionierungssystem, umfassend:
ein Paar Magnete (104), die angrenzend aneinander entlang einer X-Achse des Systems angeordnet sind und einen Spalt (103) dazwischen definieren, wobei jeder der Magnete einen Nordpol und einen Südpol aufweist und wobei die gemeinsamen Pole der Magnete (104) einander zugewandt sind, wobei das Paar Magnete (104) an einer stationären Struktur montierbar ist; und
einen Magnetsensor (301, 302, 303), der mit einer bewegbaren Struktur verbindbar und entlang einer Achse bewegbar ist, die durch den Spalt (103) hindurch verläuft, wobei, wenn in Verwendung, ein Nullmagnetfeld durch den Magnetsensor (301, 302, 303) erfasst wird, als Reaktion darauf, dass der Magnetsensor den vertikalen Punkt der Magnete (104) erreicht, wobei die vertikale Richtung entlang einer Z-Achse verläuft, die in Bezug auf das System definiert ist,
wobei der Magnetsensor einen ersten Magnetsensor (301), einen zweiten Magnetsensor (302) und einen dritten Magnetsensor (303) umfasst, wobei der erste, zweite und dritte Magnetsensor (301, 302, 303) in Bezug auf einander zum Erfassen einer linearen Bewegung entlang der jeweiligen X-, Z- und Y-Achse eines kartesischen Koordinatensystems orthogonal ausgerichtet sind.

2. System nach Anspruch 1, wobei die Magnete (104) ausgerichtet sind, dass die Nordpole der Magnete einander zugewandt sind.

3. System nach Anspruch 1, wobei die Magnete (104) ausgerichtet sind, dass die Südpole der Magnete einander zugewandt sind.

4. System nach einem der vorstehenden Ansprüche, umfassend die stationäre Struktur, wobei die stationäre Struktur eine Wand eines Aufzugsschachts ist.

5. System nach einem der vorstehenden Ansprüche, umfassend die mobile Struktur, wobei die mobile Struktur eine Aufzugskabine ist.

6. System nach einem der vorstehenden Ansprüche, wobei der Magnetsensor (301, 302, 303) innerhalb eines Gehäuses (306) angeordnet ist, das auf einem Arm montierbar ist, der mit der mobilen Struktur verbunden ist.

7. System nach Anspruch 6, wobei das Gehäuse (306) entlang einer Achse bewegbar ist, die durch den Spalt (103) hindurch verläuft.

8. Aufzugskabine, umfassend ein System nach einem der vorstehenden Ansprüche.

9. Aufzug, umfassend eine Aufzugskabine nach Anspruch 8.

## Revendications

1. Système de positionnement linéaire comprenant :
une paire d'aimants (104) disposés l'un à côté de l'autre le long de l'axe X du système et définissant un espace (103) entre eux, chacun des aimants ayant un pôle nord et un pôle sud et dans lequel les pôles communs des aimants (104) se font face, la paire d'aimants (104) pouvant être montée sur une structure stationnaire ; et
un capteur magnétique (301, 302, 303), pouvant être relié à une structure mobile, et mobile le long d'un axe passant par l'espace (103), dans lequel, lors de l'utilisation, un champ magnétique nul est détecté par le capteur magnétique (301, 302, 303) en réponse au capteur magnétique atteignant le point vertical des aimants (104), la direction verticale étant le long d'un axe Z défini par rapport au système,
dans lequel le capteur magnétique comprend un premier capteur magnétique (301), un deuxième capteur magnétique (302) et un troisième capteur magnétique (303), dans lequel les premier, deuxième et troisième capteurs magnétiques (301, 302, 303) sont orientés orthogonalement l'un par rapport à l'autre pour détecter un mouvement linéaire le long des axes X, Z et Y d'un système de coordonnées cartésiennes, respectivement.

2. Système selon la revendication 1, dans lequel les aimants (104) sont orientés avec les pôles nord des aimants face à face.

3. Système selon la revendication 1, dans lequel les aimants (104) sont orientés avec les pôles sud des aimants face à face.

4. Système selon l'une quelconque des revendications précédentes, comprenant la structure fixe, dans lequel la structure fixe est une paroi d'une cage d'ascenseur.

5. Système selon l'une quelconque des revendications précédentes, comprenant la structure mobile, dans lequel la structure mobile est une cabine d'ascenseur.

6. Système selon l'une quelconque des revendications précédentes, dans lequel le capteur magnétique (301, 302, 303) est disposé dans un boîtier (306) qui peut être monté sur un bras relié à la structure mobile.

7. Système selon la revendication 6, dans lequel le boîtier (306) est mobile le long d'un axe passant par l'espace (103).

8. Cabine d'ascenseur comprenant un système selon l'une quelconque des revendications précédentes.

9. Ascenseur comprenant une cabine d'ascenseur selon la revendication 8.
